# EUROPÄISCHE PATENTSCHRIFT

(11) **EP 0 624 549 B1**
(45) Veröffentlichungstag und Bekanntmachung des Hinweises auf die Patenterteilung: **10.09.1997**
(21) Anmeldenummer: 94106808.2
(22) Anmeldetag: 02.05.1994
(51) Int. Cl.: C01B 15/055, C11D 3/39

(54) **Stabilisierte Alkalimetallperoxosalze und Verfahren zu deren Herstellung**
Stabilized alcaline metal persalts and process for their preparation
Persels de métaux alcalins stabilisés et procédé de leur préparation

(30) Priorität: 08.05.1993 DE 4315380
(43) Veröffentlichungstag der Anmeldung: 17.11.1994
(73) Patentinhaber: Solvay Interox GmbH, D-30625 Hannover (DE)
(72) Erfinder: Dötsch, Werner, D-53557 Bad Hönningen (DE); Mathes, Manfred, D-53557 Bad Hönningen (DE); Hecken, Gerd, D-53506 Vettelschoss (DE)
(74) Vertreter: Lauer, Dieter, Dr.

(56) Entgegenhaltungen:
- DE-B- 2 530 539
- US-A- 4 105 827
- US-A- 4 325 933
- DATABASE WPI Week 8622, Derwent Publications Ltd., London, GB; AN 86-141341 & JP-A-61 077 607 (NIPPON PEROXIDE KK ET AL) 21. April 1986

## Beschreibung

Die Erfindung betrifft ein Verfahren zur Stabilisierung von teilchenförmigen Alkalimetallperoxosalzen, die ausgewählt sind aus der Gruppe Peroxocarbonat, Peroxopyrophosphat, Peroxotripolyphosphat und/oder Peroxomonosulfat, durch Umhüllen mit einem festen Hüllmaterial, sowie die dadurch erhaltenen, durch Umhüllung stabilisierten teilchenförmigen Alkalimetallperoxosalze.

Es ist bekannt, Peroxoverbindungen in pulverförmigen Waschmittelmischungen als bleichende Verbindungen einzusetzen. In den üblichen Haushaltswaschmitteln verwendet man üblicherweise Natriumperborat-Tetrahydrat oder Natriumperborat-Monohydrat als Bleichmittel, da diese Materialien in reinem Waschmittelmedium relativ beständig gegen Zersetzung sind. Immer häufiger wird jedoch auch auf andere Alkalimetallperoxosalze, insbesondere Peroxocarbonat (Percarbonat, PCS), zurückgegriffen. Diese Alkalimetallperoxosalze, insbesondere das Percarbonat, sind zwar in reinem, trockenem Zustand beständig, jedoch weisen sie den Nachteil auf, sich in Gegenwart von Feuchtigkeit unter Verlust von Aktivsauerstoff leicht zu zersetzen.

Im Stand der Technik wurde bereits vorgeschlagen, diesen Nachteil der Alkalimetallperoxosalze dadurch zu überwinden, daß man die Peroxoverbindung mit stabilisierenden Materialien oder mineralischen Schutzfilmen umhüllt. Die Lösungsvorschläge des Standes der Technik sollen nachfolgend am Beispiel des Percarbonates, insbesondere des Natriumpercarbonates (PCS) näher erläutert werden.

Die deutschen Offenlegungsschriften 33 21 082 und 33 48 394 schlagen zur Umhüllung des Percarbonates als Beschichtungsmittel ein Borat vor, welches gegebenenfalls zusätzlich ein Alkalimetallsilikat enthalten kann. Ein ähnliches Beschichtungsmaterial aus verschiedenen Borsäuren, die gegebenenfalls ebenfalls Alkalimetallsilikat enthalten können, wird in der deutschen Offenlegungsschrift 28 00 916 beschrieben. Neben diesen Lösungsversuchen, die Borverbindungen und Alkalimetallsilikate verwenden, wurden im Stand der Technik auch bereits Beschichtungsmaterialien aus Mineralsalzen empfohlen. So beschreibt die deutsche Offenlegungsschrift 29 15 980 das Umhüllen von Natriumpercarbonat mit Erdalkalimetallsalzen, die aus einer wäßrigen Lösung auf die Natriumpercarbonat-Partikel aufgebracht werden. Ferner beschreiben die deutschen Patente 24 17 572 und 26 22 610 die Stabilisierung von Alkalimetallperoxosalzen durch Umhüllen mit einem mineralischen Schutzfilm aus Natriumcarbonat mit anderen Mineralsalzen, insbesondere mit Natriumsulfat; gemäß dem deutschen Patent 26 22 610 kann diese mineralische Hüllschicht zusätzlich Natriumsilikat enthalten.

Die vorstehenden Lösungsversuche des Standes der Technik ergeben zwar bereits eine deutliche Verbesserung der Stabilität von Alkalimetallperoxosalzen wie Natriumpercarbonat, jedoch sind die Probleme insbesondere im Hinblick auf Natriumpercarbonat durch die im Stand der Technik vorgeschlagenen Lösungen noch nicht in wünschenswerter Weise gelöst. Dieses ist insbesondere darauf zurückzuführen, daß beispielsweise Percarbonat nie ganz trocken sein kann, da neben dem Restwasser aus dem Herstellungsprozeß immer auch Wasser durch Zersetzung von Wasserstoffperoxid im PCS selbst gebildet wird. Beim PCS ist hierbei auch zu berücksichtigen, daß es sich nicht um eine wohldefinierte, homogene Verbindung handelt, sondern es stets ein Gemisch von teilweise Hydratwasser-haltigen Verbindungen mit folgenden Formeln darstellt:

Na₂CO₃·1,5 H₂O₂ Na₂CO₃·1,5 H₂O₂·H₂O Na₂CO₃·2 H₂O₂·H₂O

Na₂CO₃·2 H₂O₂ Na₂CO₃·x H₂O₂

Die für die Stabilität des PCS schädliche Feuchtigkeit stammt also nicht nur aus dem Basispulver, durch welches zwar über die Einzelkomponenten wie Zeolith, lineare Alkylsulfonate, Seife, Carboxymethylzellulose, Soda, optische Aufheller etc. ein wesentlicher Teil der Feuchtigkeit in die Waschmittelzusammensetzungen eingebracht wird, sondern ein Teil der schädlichen Feuchtigkeit entstammt somit auch dem Percarbonat selbst. Eine optimale Hüllschicht für Alkalimetallperoxosalze, insbesondere für Percarbonat, muß daher in der Lage sein, nicht nur Feuchtigkeit von außen in Form eines dichten Schutzfilmes vom Percarbonat abzuhalten, sondern es muß gleichzeitig in der Lage sein, auch die aus dem Percarbonat selbst entstammende Kristallwasser- und/oder Zersetzungsfeuchtigkeit ausreichend fest zu binden. Ferner sollte das Hüllmaterial die Lösegeschwindigkeit des Alkalimetallperoxosalzes nicht wesentlich beeinträchtigen, wie dieses häufig bei Hüllschichten des Standes der Technik mit hohem Alkalimetallsilikat-Anteil beobachtet wird.

Es bestand daher die Aufgabe, ein neues Hüllmaterial für teilchenförmige Peroxoverbindungen zu finden, durch welches diesen Teilchen bei längerer Lagerung und insbesondere bei Lagerung in Gegenwart von anderen Waschmittelinhaltsstoffen eine erhöhte Stabilität verliehen wird.

Diese Aufgabe wird gelöst durch das in den Patentansprüchen definierte, umhüllte teilchenförmige Alkalimetallperoxosalz sowie das Verfahren zur Herstellung dieser umhüllten teilchenförmigen Alkalimetallperoxosalze.

Das erfindungsgemäße, umhüllte teilchenförmige Alkalimetallperoxosalz besteht aus einem Kern, der ein Alkalimetallperoxosalz aus der Gruppe Peroxocarbonat (Percarbonat), Peroxopyrophosphat, Peroxotripolyphosphat und/oder Peroxomonosulfat enthält, und aus einer den Kern umgebenden Hüllschicht, deren Hüllmaterial ein durch gemeinsame Kristallisation aus Alkalimetallsulfat und aus Alkalimetallchlorid im Molvershältnis von 1:1 bis 8:1 gebildetes Mineralsalz-Gemisch ist, wobei dieses Mineralsalz-Gemisch gegebenenfalls zusätzlich ein Alkalimetallsilikat in dispergiertem Zustand in einer Menge von bis zu 50 Gew.-% bezogen auf das Gewicht des gesamten festen Hüllmaterials enthält. Ein bevorzugtes, erfindungsgemäß umhülltes teilchenförmiges Alkalimetallperoxosalz ist das Peroxocarbonat, insbesondere das Natriumpercarbonat. Ferner ist in bevorzugten, erfindungsgemäß umhüllten teilchenförmigen Alkalimetallperoxosalzen das Alkalimetall des Sulfates oder Chlorides im Hüllmaterial Natrium oder Kalium; in dieser Ausgestaltung der Erfindung wird somit die Hüllschicht aus einem Mineralsalz-Gemisch gebildet, welches durch gemeinsame Kristallisation von einerseits Natrium- oder Kaliumsulfat mit andererseits Natrium- oder Kaliumchlorid gebildet ist.

Die vorstehenden, erfindungsgemäßen Teilchen sind durch die Hüllschicht aus dem Mineralsalzgemisch Alkalimetallsulfat/Alkalimethallchlorid (im folgenden auch Alkalimetallsulfatchlorid) überraschend gut stabilisiert. Dieses erfindungsgemäße Ergebnis überrascht umsomehr, da es sich um eine Hüllschicht aus einfachen Alkalimetallsalzen handelt, deren Einzelbestandteile für sich, d. h. das Alkalimetallsulfat oder das Alkalimetallchlorid, ebenso wie auch Hüllschichten des nächstliegenden Standes der Technik (wie beispielsweise aus Natriumcarbonat oder Natriumcarbonat/Natriumsulfat) keine derartige stabilisierende Wirkung aufweisen. Ohne eine bestimmte Theorie festzulegen oder eine einschränkende Erläuterung der Erfindung vorzunehmen, besteht eine mögliche Deutung der stabilisierenden Wirkung der erfindungsgemäßen Hüllschicht aus Alkalimetallsulfatchlorid darin, daß das Alkalimetallsulfatchlorid grundsätzlich zur Clathratbildung befähigt ist. Durch das Alkalimetallsulfatchlorid wird unter Bildung des Clathrates sowohl von außen auf das Alkalimetallperoxosalz-Teilchen einwirkende Feuchtigkeit (beispielsweise aus Waschmittelkomponenten) als auch aus dem Inneren des Alkalimetallperoxosalz-Teilchens selbst entstammendes Kristallwasser sowie Wasserstoffperoxid durch den Einbau auf Kristallgitterplätze des Clathrates sehr fest gebunden.` Hierbei ist das Wasser fester gebunden als gewöhnliches Kristallwasser, welches beispielsweise auch in Hüllschichten des Standes der Technik z. B. aus Natriumcarbonat bzw. Natriumcarbonat/Natriumsulfat vorliegt. Ein besonderer Vorteil der Clathratbildung besteht darin, daß auch das sich während der Lagerung teilweise aus dem Alkalimetallperoxosalz freisetzende Wasserstoffperoxid, durch die Alkalimetallsulfatchlorid-Hüllschicht gemäß der Erfindung sehr gut abgefangen und fest gebunden werden kann; somit wird die ansonsten unter Aktivsauerstoff-Verlust und Wasserbildung ablaufende und die Produktqualität beeinträchtigende Zersetzung von Wasserstoffperoxid aus dem Peroxosalz wirkungsvoll unterbunden.

Zwar ist im Stand der Technik die gezielte Herstellung, sowie auch die Kristallstruktur, von Clathraten aus Alkalimetallsulfat und Alkalimetallchlorid bereits beschrieben, z. B. in J.C.S. Chem. Comm., 1978, 288-289 oder in der Deutschen Offenlegungsschrift 31 41 152. Diesen Beschreibungen lassen sich jedoch keine Hinweise auf die besondere Eignung des Alkalimetallsulfatchlorids als Hüllschichtmaterial für feuchtigkeitsempfindliche Alkalimetallperoxosalze entnehmen; insbesondere finden sich auch keine Hinweise darauf, daß die Alkalimetallsulfatchloride auf Grund der hier zur Erläuterung der stabilisierenden Wirkung der erfindungsgemäßen Hüllschicht angenommenen Clathratbildung besonders gut zur Beschichtung dieser Alkalimetallperoxosalze geeignet ist. Weiterhin überrascht es, daß die Clathratbildung offenbar auch ohne Einhaltung gezielter Herstellungsbedingungen unter ganz gewöhnlichen Bedingungen, wie sie bei der Lagerung von Waschmittelzusammensetzungen vorliegen, stattfindet und somit die besondere stabilisierende Wirkung des erfindungsgemäßen Hüllschichtmaterials unter diesen Bedingungen entfaltet werden kann. Ein weiterer überraschender Vorteil besteht darin, daß zwar einerseits durch die Clathratbildung Feuchtigkeits- oder Kristallwasser bzw. Wasserstoffperoxid während der Lagerung der erfindungsgemäß beschichteten Alkalimetallperoxosalze durch das Hüllmaterial sehr fest gebunden wird, andererseits aber die Wasserlöslichkeit und die Lösegeschwindigkeit der Alkalimetallperoxosalze durch die erfindungsgemäße Beschichtung nicht vermindert werden. Die erfindungsgemäßen, umhüllten Alkalimetallperoxosalz-Teilchen weisen daher günstige anwendungstechnische Eigenschaften auf, die bei Anwendung feuchtigkeitsabweisender Beschichtungsmaterialien des Standes der Technik nicht immer in dieser Weise erreicht werden.

Das Verhältnis von Alkalimetallsulfat zum Alkalimetallchlorid im Hüllmaterial kann zwar in einem weiten Molverhältnis von Alkalimetallsulfat zu Alkalimetallchlorid von etwa 1:1 bis etwa 8:1 schwanken, da angenommen wird, daß in diesem Bereich optimale Verhältnisse für eine Clathratbildung vorliegen; bevorzugt sind jedoch Molverhältnisse von Alkalimetallsulfat zu Alkalimetallchlorid von etwa 3:1 bis etwa 5:1.

Die Mindestmenge des festen Hüllmaterials in den erfindungsgemäß umhüllten teilchenförmigen Alkalimetallperoxosalzen entspricht im wesentlichen derjenigen Menge, die für eine weitgehend vollständige Umhüllung der Teilchen erforderlich ist. Die Obergrenze für die Menge des festen Hüllmaterials wird im wesentlichen durch das Ziel bestimmt, den Aktivsauerstoffgehalt in den zu stabilisierenden Teilchen nicht unnötig durch überschüssiges Hüllmaterial zu vermindern. Zweckmäßigerweise wird daher die Menge des festen Hüllmaterials, bezogen auf das Gewicht der zu umhüllenden Teilchen des Alkalimetallperoxosalzes, 1 bis 10 Gew.-% betragen. Mit einer Hüllschicht von 1 Gew.-% wird in der Regel, je nach Oberflächeneigenschaften der Alkalimetallperoxosalz-Teilchen, bereits eine für die Stabilisierung der Teilchen brauchbare Umhüllung gewährleistet. Eine Menge des festen Hüllmaterials von mehr als 10 Gew.-% erweist sich als wenig zweckmäßig, da hierdurch nicht nur der Aktivsauerstoffgehalt der Alkalimetallperoxosalzverbindung unnötig vermindert, sondern auch eine höhere Neigung der umhüllten Teilchen zur Verklumpung (caking) beobachtet wird. In besonders vorteilhaften Teilchen beträgt die Menge an festem Hüllmaterial wenigstens 3 Gew.-%, insbesondere 3 bis 8 Gew.-%, bezogen auf die zu umhüllenden Teilchen des Alkalimetallperoxosalzes. In diesem Bereich ist eine vollständige und optimale Umhüllung der Alkalimetallperoxosalze sichergestellt.

In einer Variante der Erfindung zeichnen sich die erfindungsgemäß umhüllten teilchenförmigen Alkalimetallperoxosalze dadurch aus, daß das Hüllmaterial zusätzlich zum Mineralsalz-Gemisch ein Alkalimetallsilikat in dispergiertem Zustand in einer Menge von bis zu 50 Gew.-%, vorzugsweise bis zu 25 Gew.-%, bezogen auf das Gewicht des gesamten festen Hüllmaterials enthält. Diese Variante der erfindungsgemäßen Alkalimetallperoxosalz-Teilchen vereint die Vorteile der erfindungsgemäßen Hüllschicht mit den Vorteilen des im Stand der Technik bereits bekannten Hüllmaterials Alkalimetallsilikat, wobei allerdings die Nachteile eines reinen Alkalimetallsilikat-Hüllmaterials vermieden werden. So führt der Alkalimetallsilikat-Anteil in der erfindungsgemäßen Hüllschicht aus Alkalimetallsulfat und Alkalimetallchlorid zur Erhöhung der Abriebfestigkeit der erfindungsgemäßen Alkalimetallperoxosalz-Teilchen, ohne jedoch, wie dies zum Teil bei Hüllschichten des Standes der Technik mit hohem Alkalimetallsilikat-Anteil nachteilig ist, die Lösegeschwindigkeit der erfindungsgemäßen Teilchen zu beeinträchtigen. Aufgrund der erhöhten Abriebfestigkeit und der nicht beeinträchtigten Lösegeschwindigkeit bieten die erfindungsgemäßen Teilchen Vorteile in der Konfektionierung von Waschmitteln, ohne daß vorteilhafte Anwendungseigenschaften (z. B. Löseeigenschaften) verschlechtert sind.

In einer weiteren Variante zeichnet sich das umhüllte teilchenförmige Alkalimetallperoxosalz dadurch aus, daß die Hüllschicht aus einer den Kern umgebenden, inneren Schicht aus dem Mineralsalz-Gemisch, gegebenenfalls mit darin dispergiertem Alkalimetallsilikat, und einer zusätzlichen äußeren Deckschicht aus einem Alkalimetallsilikat besteht; die Menge des Alkalimetallsilikates der festen Deckschicht beträgt hierbei bis zu 5 Gew.-%, vorzugsweise bis zu 2 Gew.-%, bezogen auf die zu umhüllenden Teilchen des Alkalimetallperoxosalzes. Bei dieser Variante werden die Vorteile des Alkalimetallsilikat-Hüllmaterials in Bezug auf die Abriebfestigkeit ebenfalls ausgenutzt. Im Gegensatz zu einer reinen Alkalimetallsilikat-Hüllschicht gemäß Stand der Technik kann in dieser Variante der Erfindung die Deckschicht aus Alkalimetallsilikat sehr dünn ausfallen. Ferner ist es nicht erforderlich, daß eine geschlossene Alkalimetallsilikat-Deckschicht vorliegt, da diese Deckschicht im wesentlichen nur zur Erhöhung der Abriebfestigkeit dient und die Stabilisierung gegen Feuchtigkeit, bereits durch die darunter liegende erfindungsgemäße Mineralsalz-Gemisch-Hüllschicht bewirkt wird.

Geeignete Alkalimetallsilikate für die vorstehenden beiden Varianten der erfindungsgemäßen, umhüllten teilchenförmigen Alkalimetallperoxosalze sind beispielsweise Natron- und Kaliwassergläser mit verschiedenen Alkalioxid:SiO₂-Verhältnissen, insbesondere von 1 Mol Alkalioxid zu 2 bis 4 Mol SiO₂.

Gemäß der Erfindung können zwar an sich beliebige Alkalimetallperoxosalze durch Umhüllen mit der Mineralsalz-Gemisch-Hüllschicht stabilisiert werden, wobei die zu stabilisierenden Teilchen der Peroxoverbindungen sowohl ein einziges Peroxosalz oder auch eine Mischung von Peroxosalzen enthalten können, jedoch ist die Erfindung insbesondere mit Vorteil auf die Stabilisierung von Natriumperoxocarbonat (Natriumpercarbonat) gerichtet. Die Peroxosalze können geringe Mengen verschiedener, üblicher Zusätze enthalten, die im allgemeinen 10 Gew.-% des Materials nicht übersteigen. Zusätze dieser Art sind z. B. Stabilisatoren, wie insbesondere Alkalimetall- oder Magnesiumsilikate, Magnesiumsulfat, Phosphate (z. B. Metaphosphat), organische Stabilisatoren wie Chinolinsäure, Salicylsäure oder Dipicolinsäure (DPA), Chelatbildner wie 8-Oxychinolin oder Ethylendiamintetraessigsäure (EDTA), Phosphonsäurederivate wie z. B. Methylen- oder Aminomethylenphosphonsäuren oder deren Salze, insbesondere 1-Hydroxyethylidendiphosphonsäure (HEDP), sowie auch geringe Mengen üblicher Netzmittel.

Die dem erfindungsgemäß umhüllten teilchenförmigen Alkalimetallperoxosalz, insbesondere dem umhüllten Percarbonat zugrunde liegende Peroxoverbindung kann nach jedem im Stand der Technik bekannten Verfahren hergestellt worden sein. Solche Verfahren zur Herstellung von Alkalimetallperoxosalzen umfassen insbesondere Sprühtrocknungsverfahren, Wirbelschichtverfahren und sogenannte Trockenverfahren. Insbesondere bei den Trockenverfahren werden schwere Teilchen erhalten, die sich nach erfindungsgemäßer Umhüllung mit einem Mineralsalz-Gemisch aus Alkalimetallsulfat und Alkalimetallchlorid vorteilhaft für den Einsatz in kompakten Wasch- und Bleichmitteln eignen.

Demgemäß lassen sich die erfindungsgemäßen, umhüllten teilchenförmigen Alkalimetallperoxosalze generell in Wasch- oder Bleichmitteln verwenden, insbesondere aber in Kompaktwasch- oder Kompaktbleichmitteln.

Die Erfindung betrifft auch ein Verfahren zur Herstellung der erfindungsgemäß stabilisierten teilchenförmigen Alkalimetallperoxosalze durch Umhüllen mit einer festen Hüllschicht, deren Hüllmaterial im wesentlichen ein Mineralsalz-Gemisch ist; dieses erfindungsgemäße Verfahren zeichnet sich dadurch aus, daß man als Hüllmaterial ein Mineralsalz-Gemisch verwendet, das durch gemeinsame Kristallisation von Alkalimetallsulfat und Alkalimetallchlorid gebildet wurde, wobei gegebenenfalls zusätzlich in diesem Mineralsalz-Gemisch ein Alkalimetallsilikat in einer Menge von bis zu 50 Gew.-%, vorzugsweise bis zu 25 Gew.-%, bezogen auf das Gewicht des gesamten festen Hüllmaterials, dispergiert wurde. Dieses Verfahren zur Herstellung der erfindungsgemäßen, umhüllten teilchenförmigen Alkalimetallperoxosalze wird derart ausgeführt, daß man die Teilchen der Peroxosalze mit einem die Bestandteile des Hüllmaterials enthaltenden wäßrigen System (Coating-Mittel) behandelt und dann zur Trocknung der behandelten Teilchen das Wasser verdampft. Bei dieser Verfahrensweise wird auf der Oberfläche der Alkalimetallperoxosalz-Teilchen durch Kristallisation eine Hüllschicht erzeugt, die aus gemischten Verbindungen aus Alkalimetallsulfat und Alkalimetallchlorid besteht, und in der gegebenenfalls Alkalimetallsilikat dispergiert ist.

Die Konzentration, in der die verschiedenen Bestandteile des Hüllmaterials im Coating-Mittel enthalten sind, liegt zweckmäßigerweise mindestens bei der Sättigungskonzentration bei den Anwendungsbedingungen. Das wäßrige Coating-Mittel ist vorzugsweise so sehr konzentriert, daß bereits eine Übersättigung besteht; in der Regel liegt also keine klare, wäßrige Lösung mehr vor, sondern ein eher trübes, kolloides wäßriges System (Emulsion, Dispersion) bis hin zu einer feinteiligen Suspension oder Sole. In diesem Fall muß anschließend nur eine minimale Wassermenge verdampft werden. Die Temperatur, bei der die Teilchen mit dem Coating-Mittel behandelt und das Verdampfen des Wassers durchführt wird, wird in Abhängigkeit von der Art der zu behandelnden Peroxoverbindung ausgewählt. Die Behandlung der Alkalimetallperoxosalz-Teilchen mit dem Coating-Mittel wird im allgemeinen bei einer Temperatur durchgeführt, die geringfügig unterhalb, bei oder geringfügig oberhalb der Temperatur der zu umhüllenden Teilchen liegt, insbesondere bei einer Temperatur des Coating-Mittels, die zwischen der Temperatur der zu umhüllenden Teilchen und einer Temperatur von bis zu 25 °C oberhalb bzw. unterhalb der Temperatur der zu umhüllenden Teilchen liegt. Bei der Durchführung dieser Maßnahmen werden die Teilchen der Peroxoverbindung zweckmäßig bei einer Temperatur gehalten, die unterhalb der Zersetzungstemperatur der Peroxoverbindung und im allgemeinen unterhalb 90 °C liegt. Beim Verdampfen des Wassers zur Trocknung der Teilchen liegt die Temperatur im allgemeinen zwischen 30 und 80 °C.

Das Aufbringen der Hüllschicht kann sowohl in diskontinuierlicher als auch in kontinuierlicher Arbeitsweise erfolgen. Bei diskontinuierlicher Arbeitsweise können die Peroxosalz-Teilchen beispielsweise in einem geeigneten Mischer, z. B. einem Pflugscharmischer (Lödige-Mischer) behandelt und nachfolgend der Trocknung (beispielsweise in einer Wirbelschicht) zugeführt werden. Die Peroxosalz-Teilchen können auch in einer Wirbelschicht mit der Lösung der Hüllmaterial-Bestandteile besprüht werden; hierbei kann das Verdampfen des Wassers gleichzeitig in dem Wirbelbett durchgeführt und in einem Schritt trockene, umhüllte Teilchen hergestellt werden. Dieses Wirbelschichtverfahren wird in an sich üblicher Weise durchgeführt und kann auch kontinuierlich ausgestaltet werden. In einer bevorzugten Variante des Verfahrens zur Herstellung der erfindungsgemäß umhüllten Alkalimetallperoxosalze wird das Hüllmaterial aus Alkalimetallsulfat und Alkalimetallchlorid, sowie gegebenenfalls zusätzlichem Alkalimetallsilikat, in einem Ringschichtmischer auf das teilchenförmige Alkalimetallperoxosalz aufgebracht. In einem solchen Ringschichtmischer werden die zu umhüllenden Teilchen bei Umdrehungen von insbesondere 1500 bis 1800 Upm (Umdrehungen pro Minute) innerhalb einer Ringschicht an der Wandung des Ringschichtmischers gemischt, umgebrochen und mit dem wäßrigen Coating-Mittel unter intensiver Durchmischung behandelt. Das derart im Ringschichtmischer erzeugte feuchte Produkt wird nachfolgend in konventioneller Weise, beispielsweise in einem Wirbelschicht-Trockner, getrocknet. Das Herstellverfahren unter Verwendung des Ringschichtmischers ist bevorzugt, da es ein effektives Verfahren darstellt und gegenüber anderen Verfahren zu besseren Ergebnissen, insbesondere zu Produkten mit homogenerer Beschichtung führt.

In einer Abwandlung des vorstehenden Verfahrens zur Herstellung der stabilisierten teilchenförmigen Alkalimetallperoxosalze durch Umhüllen mit einer festen Hüllschicht werden die erfindungsgemäßen, umhüllten teilchenförmigen Alkalimetallperoxosalze, die eine zusätzliche Deckschicht aus Alkalimetallsilikat enthalten derart hergestellt, daß man zunächst ein umhülltes teilchenförmiges Alkalimetallperoxosalz nach einem der vorstehend angegebenen Verfahren mit einer den Kern umgebenden inneren Schicht aus Alkalimetallsulfat und Alkalimetallchlorid, sowie gegebenenfalls zusätzlich darin dispergiertem Alkalimetallsilikat, herstellt und dann eine zusätzliche Deckschicht aus einem Alkalimetallsilikat aufbringt; die Menge die Alkalimetallsilikates der festen Deckschicht beträgt hierbei bis zu 5 Gew.-%, vorzugsweise bis zu 2 Gew.-%, bezogen auf die zu umhüllenden Teilchen des Alkalimetallperoxosalzes. Diese zusätzliche Deckschicht aus Alkalimetallsilikat kann nach jedem konventionellen Verfahren, beispielsweise in einem Pflugscharmischer (Lödige-Mischer), in einem Wirbelschichtverfahren oder in einem Ringschichtmischer aufgebracht werden. Hierbei sind jeweils die vorstehend angegebenen Bedingungen in der gleichen Weise wie bei der Umhüllung der Alkalimetallperoxosalze mit der erfindungsgemäßen Mineralsalz-Gemisch-Hüllschicht anzuwenden.

Die erfindungsgemäßen, umhüllten Alkalimetallperoxosalz-Teilchen weisen eine günstige Kombination einer Reihe verschiedener Vorteile auf. So werden gemäß der Erfindung vorteilhaft umhüllte Teilchen von Peroxoverbindungen zur Verfügung gestellt, die sowohl gegen die Feuchtigkeit aus den Basisbestandteilen von Waschmitteln als auch gegen die diesen Alkalimetallperoxosalz-Teilchen innewohnende Restfeuchtigkeit gut stabilisiert sind. Ferner wird durch die Hüllschicht gemäß der Erfindung nicht nur in effektiver Weise die Feuchtigkeit von außen abgehalten und die Feuchtigkeit von innen gebunden, sondern vielmehr auch das sich, insbesondere bei Percarbonat, aus diesen Verbindungen leicht abspaltende Wasserstoffperoxid; aufgrund der Fixierung des freigesetzten Wasserstoffperoxides kann dieses dann nicht mehr unter Verlust von Aktivsauerstoff zu Wasser zersetzen und somit auch nicht mehr selbst zersetzungsfördernd auf das Peroxosalz, z. B. das Percarbonat, wirken. Die erfindungsgemäß umhüllten Alkalimetallperoxosalze, insbesondere das Percarbonat, weisen sehr gute Stabilität auch in Gegenwart von üblichen Bestandteilen von Waschmitteln, wie beispielsweise Zeolithe, lineare Alkylsulfonate, Seife, Carboxymethylzellulose, Soda, optische Aufheller etc. auf. Die Wasserlöslichkeit und die Lösegeschwindigkeit der erfindungsgemäß umhüllten Alkalimetallperoxosalz-Teilchen werden durch die Beschichtung aus Alkalimetallsulfatchlorid nicht vermindert; gute anwendungstechnische Eigenschaften sind somit gewährleistet.

Die nachfolgenden Beispiele dienen der weiteren Erläuterung der Erfindung.

### Beispiel 1:

Zur Herstellung von Mustermengen erfindungsgemäß beschichteter PCS-Teilchen wurde nach folgendem Verfahren gearbeitet:
Zu 1000 g Natriumpercarbonat (PCS), welches nach einem in der deutschen Patentschrift DE-PS 23 28 803 beschriebenen Verfahren hergestellt wurde, wurden in einem Lödige-Mischer (Typ M5R) bei einer Drehzahl der Mischwerkzeuge von 200 Upm (Upm = Umdrehungen pro Minute) aus einem Tropftrichter innerhalb einer Zugabezeit von 30 bis 60 Sekunden 162 g eines Coating-Mittels der nachfolgend angegebenen Zusammensetzung zugegeben. 1000 g des vorstehend verwendeten Coating-Mittels setzten sich aus 675 g Wasser, 295 g Natriumsulfat und 30 g Natriumchlorid zusammen; das Coating-Mittel wies bei der Verwendung eine Temperatur von 40 bis 50 °C auf.
Es wurde noch 60 Sekunden nachgemischt, das feuchte Produkt dann dem Mischer entnommen und in einem Glatt-Wirbelbetttrockner bei einer Zulufttemperatur von 100 bis 115 °C und einer Ablufttemperatur von 70 °C getrocknet. Das so hergestellte, beschichtete Natriumpercarbonat-Produkt wies die in Tabelle I unter Nr. E.4 angegebenen Eigenschaften auf.
Die Herstellung größerer Produktmengen erfindungsgemäß beschichteter PCS-Teilchen erfolgte in einem Ringschichtmischer und nachfolgender Trocknung in einem Wirbelbetttrockner unter vergleichbaren Bedingungen wie oben angegeben.

### Beispiel 2:

Analog Beispiel 1 wurden weitere beschichtete Natriumpercarbonat-Produkte hergestellt. Hierbei wurden das Molverhältnis von Natriumsulfat zu Natriumchlorid und der Beschichtungsgrad variiert. Weiterhin wurde ein Natriumpercarbonat-Produkt mit einer Beschichtung aus Natriumsulfat/Kaliumchlorid hergestellt. Die jeweiligen Coating-Mittel enthielten bezogen auf 1000 g jeweils 675 g Wasser und wiesen folgende Salzgehalte Na₂SO₄/NaCl auf: 230 g/95 g (E.1); 295 g/30 g (E.2, E.3, E.5); 309 g/16 g (E.6); Salzgehalt Na₂SO₄/KCl: 287 g/38 g (E.7).
In einer weiteren Variante der Erfindung wurden die Natriumpercarbonat-Teilchen mit einer Natriumsulfat/Natriumchlorid-Beschichtung umhüllt, in der zusätzlich Wasserglas mit einem Molverhältnis von Na₂O:SiO₂ = 3,5 enthalten war. Das Gewichtsverhältnis von Natriumsulfat/Natriumchlorid zu Wasserglas betrug hierbei 75 Gew.-% zu 25 Gew.-%. Das Coating-Mittel setzte sich bezogen auf 1000 g wie folgt zusammen: 750 g des Coating-Mittels gemäß Beispiel 1 und 250 g Wasserglas (76 g/kg Na₂O, 258 g/kg SiO₂).
In einer weiteren Variante der Erfindung wurden die Natriumpercarbonat-Teilchen zunächst mit einer Hüllschicht aus Natriumsulfat und Natriumchlorid gemäß Beispiel 1 beschichtet (Beschichtungsgrad etwa 3,75 Gew.-%), nachfolgend mit einer zusätzlichen Deckschicht aus Wasserglas mit einem Na₂O:SiO₂-Molverhältnis von 3,5 beschichtet (Beschichtungsgrad etwa 1,25 Gew.-%); die Beschichtungsbedingungen waren hierbei so gewählt, daß insgesamt ein Beschichtungsgrad von 5 Gew.-% resultierte und das Gewichtsverhältnis von Natriumsulfat/Natriumchlorid zum Wasserglas (jeweils bezogen auf den Feststoff) 75 Gew.-% zu 25 Gew.-% betrug.
Die Eigenschaften der so hergestellten, beschichteten Natriumpercarbonat-Produkte sind ebenfalls in Tabelle I zusammengestellt.

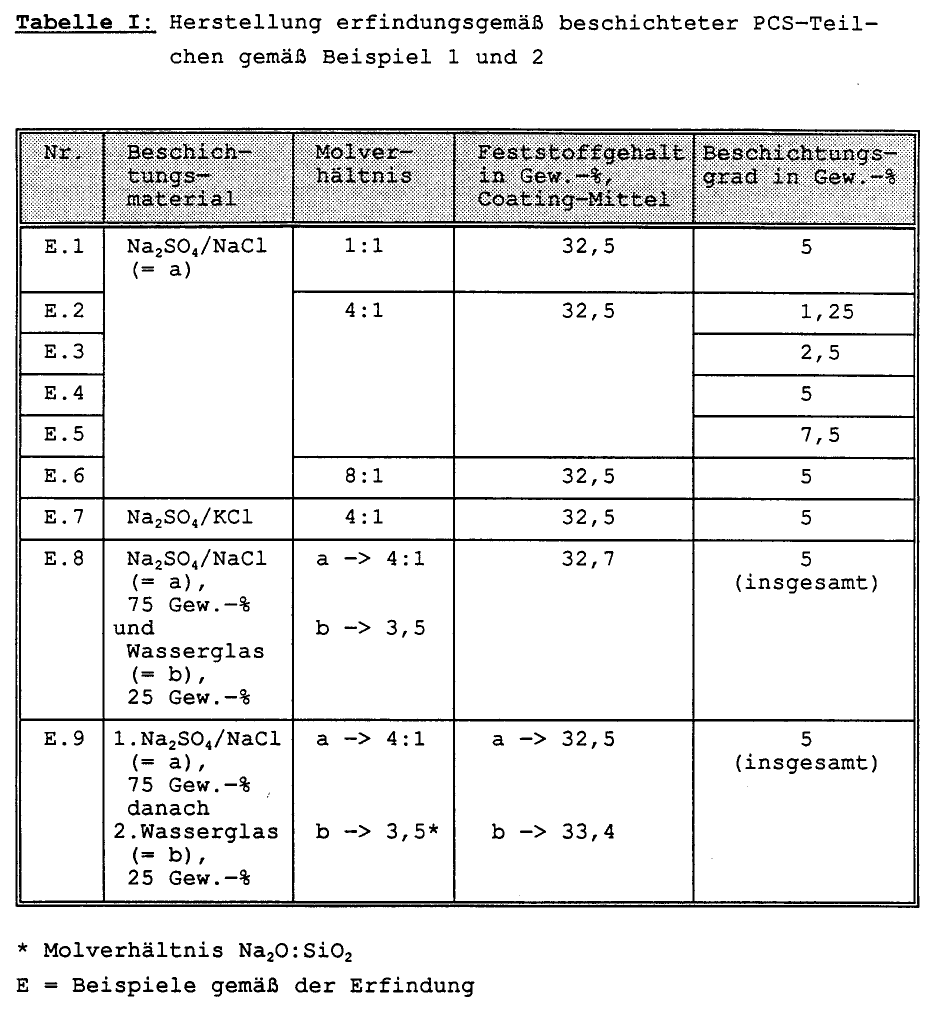

### Beispiel 3:

An den in Beispiel 1 und Beispiel 2 hergestellten, erfindungsgemäß beschichteten Natriumpercarbonat-Produkten wurden zur Beurteilung der Lagerfähigkeit und der Stabilitätseigenschaften Wärmefluß-Messungen ("LKB"-Messungen) durchgeführt. Bei diesen Wärmefluß-Messungen geben die bei isothermen Meßbedingungen auftretenden Wärmeflüsse Hinweise auf die Stabilität des aktivsauerstoffhaltigen Produktes; insbesondere läßt sich auch die Stabilität des Produktes in Gegenwart von Waschmittelbestandteilen ermitteln, wenn die Wärmefluß-Messungen an Proben vorgenommen werden, in denen das aktivsauerstoffhaltige Produkt mit den Waschmittelbestandteilen gemischt vorliegt. Für die hier durchgeführten Wärmefluß-Messungen wurden daher die erfindungsgemäß beschichteten PCS-Produkte in einer solchen Menge in eine Waschmittelbasis eingebracht, daß der Aktivsauerstoffgehalt 2 % betrug. Die verwendete Waschmittelbasis war ein aktivsauerstofffreies Standardwaschmittel auf Zeolithbasis, welches als Bestandteile in üblichen Mengen Zeolith, lineare Alkylsulfonate (LAS), Seife, Carboxymethylcellulose (CMC), Soda und optische Aufheller enthielt. Die Wärmefluß-Messungen an diesen Proben wurden in einem LKB 2277 Bio Activity Monitor bei 40 °C über einen Zeitraum von 20 h durchgeführt.
Zum Vergleich mit den erfindungsgemäßen Proben wurden in gleicher Weise auch Wärmefluß-Messungen an Natriumpercarbonat-Produkten des Standes der Technik, die mit Natriumcarbonat oder Natriumcarbonat/Natriumsulfat (Mol-Verhältnis 2,5:1; Beschichtungsgrad 2,5 und 3 Gew.-%) durchgeführt. Die jeweils gemessenen Wärmeflußwerte in µW/g sind in Tabelle II wiedergegeben. Je niedriger der gemessene Wärmefluß, desto höher ist die Stabilität des aktivsauerstoffhaltigen Produktes in der Waschmittelbasis, bzw. umso vorteilhafter ist die jeweilige Beschichtung der beschichteten PCS-Teilchen.

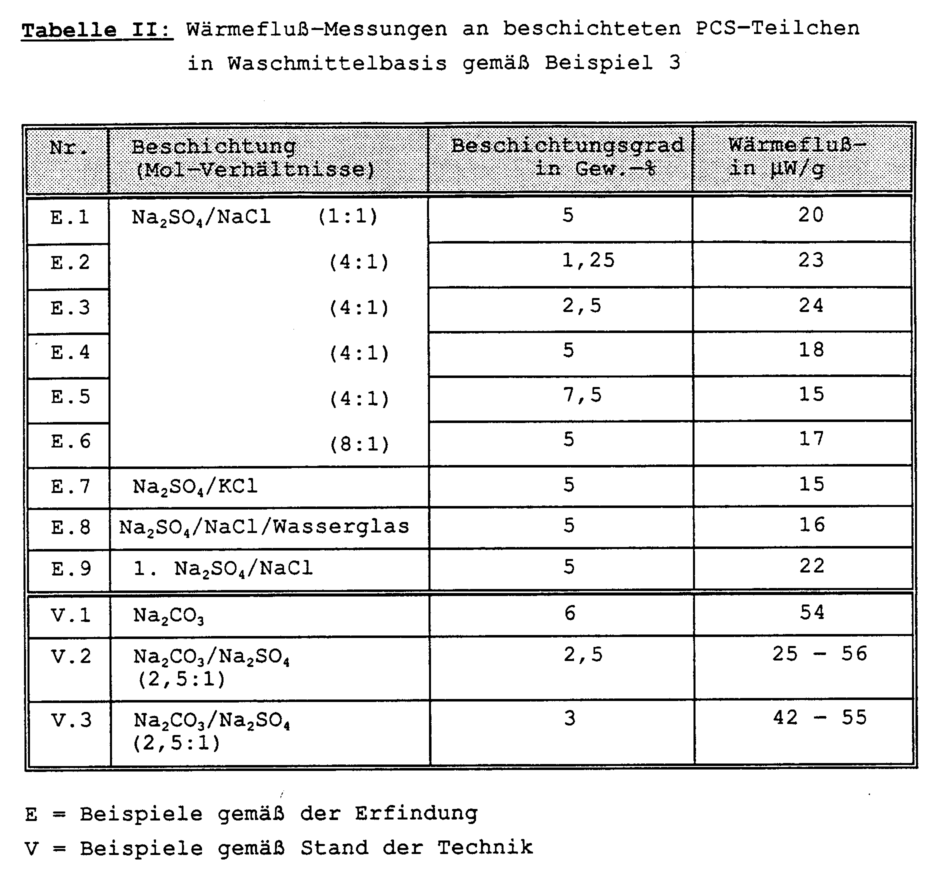

## Patentansprüche

1. Umhülltes teilchenförmiges Alkalimetallperoxosalz, bestehend aus einem Kern, der ein Alkalimetallperoxosalz aus der Gruppe Peroxocarbonat, Peroxopyrophosphat, Peroxotripolyphosphat und/oder Peroxomonosulfat enthält, und aus einer den Kern umgebenden Hüllschicht, deren Hüllmaterial ein durch gemeinsame Kristallisation aus Alkalimetallsulfat und aus Alkalimetallchlorid im Molverhältnis von 1:1 bis 8:1 gebildetes Mineralsalz-Gemisch ist, wobei dieses Mineralsalz-Gemisch gegebenenfalls zusätzlich ein Alkalimetallsilikat in dispergiertem Zustand in einer Menge von bis zu 50 Gew.-% bezogen auf das Gewicht des gesamten festen Hüllmaterials enthält.

2. Umhülltes teilchenförmiges Alkalimetallperoxosalz nach Anspruch 1, dadurch gekennzeichnet, daß das Alkalimetallperoxosalz Peroxocarbonat, vorzugsweise Natriumpercarbonat, ist.

3. Umhülltes teilchenförmiges Alkalimetallperoxosalz nach Anspruch 1 oder 2, dadurch gekennzeichnet, daß das Alkalimetall des Sulfates oder Chlorides im Hüllmaterial Natrium oder Kalium ist.

4. Umhülltes teilchenförmiges Alkalimetallperoxosalz nach einem der vorhergehenden Ansprüche, dadurch gekennzeichnet, daß das Alkalimetallsulfat und das Alkalimetallchlorid im Hüllmaterial im Molverhältnis 3:1 bis 5:1 vorliegt.

5. Umhülltes teilchenförmiges Alkalimetallperoxosalz nach einem der vorhergehenden Ansprüche, dadurch gekennzeichnet, daß die Menge des festen Hüllmaterials 1 bis 10 Gew.-%, vorzugsweise 3 bis 8 Gew.-%, bezogen auf die zu umhüllenden Teilchen des Alkalimetallperoxosalzes beträgt.

6. Umhülltes teilchenförmiges Alkalimetallperoxosalz nach einem der Ansprüche 1 bis 5, dadurch gekennzeichnet, daß das Hüllmaterial zusätzlich zum Mineralsalz-Gemisch ein Alkalimetallsilikat in dispergiertem Zustand in einer Menge von bis zu 25 Gew.-% bezogen auf das Gewicht des gesamten festen Hüllmaterials enthält.

7. Umhülltes teilchenförmiges Alkalimetallperoxosalz nach einem der Ansprüche 1 bis 6, dadurch gekennzeichnet, daß die Hüllschicht aus einer den Kern umgebenden, inneren Schicht aus dem Mineralsalz-Gemisch, gegebenenfalls mit darin dispergiertem Alkalimetallsilikat, und einer zusätzlichen äußeren Deckschicht aus einem Alkalimetallsilikat besteht, wobei die Menge des Alkalimetallsilikats der festen Deckschicht bis zu 5 Gew.-%, vorzugsweise bis zu 2 Gew.-%, bezogen auf die zu umhüllenden Teilchen des Alkalimetallperoxosalzes, beträgt.

8. Verfahren zur Herstellung eines stabilisierten teilchenförmigen Alkalimetallperoxosalzes gemäß einem der Ansprüche 1 bis 6 durch Umhüllen mit einer festen Hüllschicht, deren Hüllmaterial im wesentlichen ein Mineralsalz-Gemisch ist, dadurch gekennzeichnet, daß man als Hüllmaterial ein Mineralsalz-Gemisch verwendet, das durch gemeinsame Kristallisation von Alkalimetallsulfat und Alkalimetallchlorid gebildet wurde, wobei gegebenenfalls zusätzlich in diesem Mineralsalz-Gemisch ein Alkalimetallsilikat in einer Menge von bis zu 50 Gew.-%, vorzugsweise bis zu 25 Gew.-%, bezogen auf das Gewicht des gesamten festen Hüllmaterials, dispergiert wurde.

9. Verfahren gemäß Anspruch 8, dadurch gekennzeichnet, daß man das Hüllmaterial aus Alkalimetallsulfat und Alkalimetallchlorid sowie gegebenenfalls zusätzlichem Alkalimetallsilikat in einem Ringschichtmischer auf das teilchenförmige Alkalimetallperoxosalz aufbringt.

10. Verfahren zur Herstellung eines stabilisierten teilchenförmigen Alkalimetallperoxosalzes gemäß Anspruch 7 durch Umhüllen mit einer festen Hüllschicht, dadurch gekennzeichnet, daß man zunächst ein umhülltes teilchenförmiges Alkalimetallperoxosalz nach einem der in Anspruch 8 und 9 angegebenen Verfahren mit einer den Kern umgebenden inneren Schicht aus Alkalimetallsulfat und Alkalimetallchlorid sowie gegebenenfalls zusätzlich darin dispergiertem Alkalimetallsilikat herstellt und dann eine zusätzliche Deckschicht aus einem Alkalimetallsilikat aufbringt, wobei die Menge des Alkalimetallsilikates der festen Deckschicht bis zu 5 Gew.-%, vorzugsweise bis zu 2 Gew.-%, bezogen auf die zu umhüllenden Teilchen des Alkalimetallperoxosalzes beträgt.

11. Verwendung von umhüllten teilchenförmigen Alkalimetallperoxosalzen gemäß einem der Ansprüche 1 bis 7 in Wasch- oder Bleichmitteln, insbesondere in Kompaktwasch- oder Kompaktbleichmitteln.

## Claims

1. Coated particulate alkali metal peroxy salt consisting of a nucleus which contains an alkali metal peroxy salt of the group of peroxycarbonate, peroxypyrophosphate, peroxytripolyphosphate and/or peroxymonosulphate, and of a coating layer surrounding the nucleus, the coating material of which is a mineral salt mixture formed by joint crystallisation from alkali metal sulphate and alkali metal chloride in a molar ratio of 1:1 to 8:1, wherein said mineral salt mixture may optionally aditionallycontain an alkali metal silicate in the dispersed state in an amount of up to 50% by wt. based on the weight of the total solid coating materrial

2. Coated particulate alkali metal peroxy salt according to claim 1 characterised in that the alkali metal peroxy salt is peroxycarbonate, preferably sodium percarbonate

3. Coated particulate alkali metal peroxy salt according to claim 1 or 2 characterised in that the alkali metal of the sulphate or chloride in the coating material is sodium or potassium.

4. Coated particulate alkali metal peroxy salt according to one of the preceding claims characterised in that the alkali metal sulphate and the alkali metal chloride are present in the coating material in a molar ratio of 3:1 to 5:1.

5. Coated particulate alkali metal peroxy salt according to one of the preceding claims characterised in that the amount of the solid coating material is 1 to 10% by wt., preferably 3 to 8% by wt. based on the alkali metal peroxy salt particles to be coated.

6. Coated particulate alkali metal peroxy salt according to one of claims 1 to 5 characterised in that, in addition to the mineral salt mixture, the coating material contains an alkali metal silicate in the dispersed state in an amount of up to 25% by wt based on the weight of the total solid coating material.

7. Coated particulate alkali metal peroxy salt according to one of claims 1 to 6 characterised in that the coating layer consists of an inner layer, surrounding the nucleus, of the mineral salt mixture, if necessary with alkali metal silicate dispersed therein and an additional outer covering layer of an alkali metal silicate, the amount of alkali metal silicate in the solid covering layer being up to 5% by wt., preferably up to 2% by wt. based on the particles of alkali metal peroxy salt to be coated.

8. Process for the preparation of a stabilised particulate alkali metal peroxy salt according to one of claims 1 to 6 by coating with a solid coating layer the coating material of which is essentially a mineral salt mixture, characterised in that a mineral salt mixture is used as the coating material which was formed by the joint crystallisation of alkali metal sulphate and alkali metal chloride, if necessary, an alkali metal silicate being additionally dispersed in this mineral salt mixture in an amount of up to 50% by wt., preferably of up to 25% by wt. based on the weight of the total solid coating material,

9. Process according to claim 8, characterised in that the coating material of alkali metal sulphate and alkali metal chloride and, if necessary, additional alkali metal silicate is applied onto the particulate alkali metal peroxy salt in a circular layer mixer.

10. Process for the production of a stabilised particulate alkali metal peroxy salt according to claim 7 by coating with a solid coating layer, characterised in that a coated particulate alkali metal peroxy salt is first produced according to one of the processes indicated in claim 8 and 9 with an inner layer, surrounding the nucleus, of alkali metal sulphate and alkali metal chloride and, if necessary, alkali metal silicate additionally dispersed therein and an additional covering layer of an alkali metal silicate is then applied, the amount of alkali metal silicate of the solid covering layer being up to 5% by weight, preferably up to 2% by weight based on the alkali metal peroxy salt particles to be coated.

11. Use of coated particulate alkali metal peroxy salts according to one of claims 1 to 7 in detergents or bleaching agents, in particular in compact detergents or compact bleaching agents.

## Revendications

1. Persel de métal alcalin particulaire enrobé, constitué d'un noyau qui contient un persel de métal alcalin du groupe du peroxocarbonate, du peroxopyrophosphate, du peroxotripolyphosphate et/ou du peroxomonosulfate, et d'une couche d'enrobage entourant le noyau, dont le matériau d'enrobage est un mélange de sels minéraux formé par cristallisation commune à partir de sulfate de métal alcalin et de chlorure de métal alcalin dans un rapport molaire de 1 : 1 à 8 : 1, ce mélange de sels minéraux contenant éventuellement en outre un silicate de métal alcalin sous forme dispersée en une quantitéjusqu'à 50 % en poids par rapport à la masse du matériau d'enrobage solide total.

2. Persel de métal alcalin particulaire enrobé selon la revendication 1, caractérisé en ce que le persel de métal alcalin est du peroxocarbonate, de préférence du percarbonate de sodium.

3. Persel de métal alcalin particulaire enrobé selon la revendication 1 ou 2, caractérisé en ce que le métal alcalin du sulfate ou du chlorure dans le matériau d'enrobage est le sodium ou le potassium.

4. Persel de métal alcalin particulaire enrobé selon l'une des revendications précédentes, caractérisé en ce que le sulfate de métal alcalin et le chlorure de métal alcalin dans le matériau d'enrobage sont présents à un rapport molaire de 3 : 1 à 5 : 1.

5. Persel de métal alcalin particulaire enrobé selon l'une des revendications précédentes, caractérisé en ce que la quantité de matériau d'enrobage solide s'élève à 1 à 10 % en poids, de préférence à 3 à 8 % en poids, par rapport aux particules du persel de métal alcalin à enrober.

6. Persel de métal alcalin particulaire enrobé selon l'une des revendications 1 à 5, caractérisé en ce que le matériau d'enrobage contient en plus du mélange de sels minéraux, un silicate de métal alcalin sous forme dispersée en une quantité jusqu'à 25 % en poids, par rapport à la masse du matériau d'enrobage solide totale.

7. Persel de métal alcalin particulaire enrobé selon l'une des revendications 1 à 6, caractérisé en ce que la couche d'enrobage est constituée d'une couche interne entourant le noyau, constituée du mélange de sels minéraux, contenant éventuellement du silicate de métal alcalin dispersé, et d'une couche de recouvrement externe supplémentaire constituée d'un silicate de métal alcalin, la quantité du silicate de métal alcalin de la couche de recouvrement solide représentant jusqu'à 5 % en poids, de préférence jusqu'à 2 % en poids, par rapport aux particules du persel de métal alcalin à enrober.

8. Procédé pour la préparation d'un persel de métal alcalin particulaire, stabilisé, selon l'une des revendications 1 à 6, par enrobage avec une couche d'enrobage solide, dont le matériau d'enrobage est essentiellement un mélange de sels minéraux, caractérisé en ce qu'on utilise à titre de matériau d'enrobage un mélange de sels minéraux, qui a été formé par cristallisation commune de sulfate de métal alcalin et de chlorure de métal alcalin, un silicate de métal alcalin ayant en outre éventuellement été dispersé dans ce mélange de sels minéraux en une quantitéjusqu'à 50 % en poids, de préférencejusqu'à 25 % en poids, par rapport à la masse du matériau d'enrobage solide total.

9. Procédé selon la revendication 8, caractérisé en ce qu'on applique le matériau d'enrobage constitué de sulfate de métal alcalin et de chlorure de métal alcalin, de même qu'éventuellement de silicate de métal alcalin supplémentaire, dans un agitateur à couche annulaire, sur le persel de métal alcalin particulaire.

10. Procédé pour la préparation d'un persel de métal alcalin particulaire, stabilisé, selon la revendication 7, par enrobage avec une couche d'enrobage solide, caractérisé en ce qu'on prépare d'abord un persel de métal alcalin particulaire enrobé suivant un des procédés indiqués à la revendication 8 et 9, avec une couche interne de sulfate de métal alcalin et de chlorure de métal alcalin, entourant le noyau, contenant éventuellement en outre du silicate de métal alcalin dispersé, et en ce qu'on applique ensuite une couche de recouvrement supplémentaire constituée d'un silicate de métal alcalin, la quantité du silicate de métal alcalin de la couche de recouvrement solide représentant jusqu'à 5 % en poids, de préférence jusqu'à 2 % en poids, par rapport aux particules du persel de métal alcalin à enrober.

11. Utilisation de persels de métaux alcalins particulaires enrobés, selon l'une des revendications 1 à 7, dans des produits de lavage ou de blanchiment, en particulier dans des produits de lavage compacts ou de blanchiment compacts.
